Europäisches Patentamt

European Patent Office

Office européen des brevets

(19)

(11) Numéro de publication: **0 391 771**
**A1**

# (12) DEMANDE DE BREVET EUROPEEN

(21) Numéro de dépôt: 90400845.5

(22) Date de dépôt: 28.03.90

(51) Int. Cl.5: **H04J 3/16, G11B 7/013**

Le titre de l'invention a été modifié (Directives relatives à l'examen pratiqué à l'OEB, A-III, 7.3)

(30) Priorité: 28.03.89 FR 8903982

(43) Date de publication de la demande:
**10.10.90 Bulletin 90/41**

(84) Etats contractants désignés:
**AT BE CH DE DK ES FR GB GR IT LI LU NL SE**

(71) Demandeur: **MOULAGE PLASTIQUE DE L'OUEST**
**Averton**

**F-53700 Villaines-la-Juhel(FR)**

(72) Inventeur: **De Poix, Loîc**
**Le Croc de Chon, Grennes Sur Fraubée**
**F-53700 Villaines La Juhel(FR)**
Inventeur: **Des Rieux, Marc**
**7 Cours Clémenceau**
**F-61000 Alencon(FR)**

(74) Mandataire: **Kügele, Bernhard et al**
**NOVAPAT FRANCE 63 bis, boulevard Bessières**
**F-75017 Paris(FR)**

(54) **Procédé de multiplexage de signaux numériques de nature différente, procédé et interface de décodage et disque numérique support de tels signaux.**

(57) La présente invention concerne tout d'abord un procédé de multiplexage de deux signaux numériques de nature différente, par exemple un signal informatique et un signal audio-numérique en vue de leur enregistrement sur un support numérique, organisé en secteurs indexés dont la longueur de L octets est définie et invariable, qu'on constitue des multitrames d'une longueur totale de M octets organisées en trois séries de trames, la première série (1) des trames de ladite multitrame correspondant à un préambule regroupant la totalité des signaux de service, la deuxième série (3) de trames regroupant en K canaux successifs les signaux numériques de la première catégorie, et la troisième série (5) de trames regroupant en K canaux successifs les signaux numériques de la deuxième catégorie, la longueur cumulée des trois séries de trames étant de M octets, la longueur de ladite première série de trames et la longueur de ladite deuxième série de trames étant des multiples de K, M étant un multiple entier ou demi-entier de L.

La présente invention concerne également un procédé de décodage de signaux numériques ainsi multiplexés ainsi qu'une interface de décodage et un disque numérique comportant des secteurs de données numériques ainsi organisées.

Applications : Livres parlant et programmes d'enseignement assistés par ordinateur restituable à l'aide d'un lecteur de disques numériques courant.

Fig 1

La présente invention concerne un procédé de multiplexage de deux signaux numériques de nature différente en vue de leur enregistrement sur un support numérique, ainsi que le procédé de décodage de tels signaux, l'interface pour la mise en oeuvre dudit procédé et un disque numérique comportant de tels signaux.

On connaît dans l'état de l'art, des procédés permettant de stocker sur un même support numérique des signaux de nature différente, par exemple des signaux audio d'une part et des signaux correspondant à des informations graphiques, textuelles ou informatiques d'autre part. Les dispositifs connus dans l'état de l'art présentent l'inconvénient de disposer de capacités d'archivage limités et de nécessiter à des recours à des appareils de lecture et/ou d'enregistrement spécifiques d'un coût élevé. En effet, la complexité des systèmes d'entrée et de sortie requis pour extraire les informations et à leur restitution de façon synchrone impose l'utilisation de protocole de resynchronisation sophistiqué, et donc de circuits particulièrement complexes.

L'objet de la présente invention est de remédier à ces inconvénients en proposant un procédé de multiplexage compatible à la fois avec les standards actuels d'inscription d'informations numériques sur des disques numériques, appelés communément "compact disque", et avec les standards en matière de transmission de données informatiques en vue de leur affichage sur des écrans vidéo et/ou leur traitement par des circuits largement diffusés.

La présente invention concerne tout particulièrement le multiplexage d'informations de nature différente, telles que des informations visuelles, graphiques, ou textuelles et des informations audio. Une des applications importantes d'un tel procédé est la réalisation d'un livre parlant, consistant en l'affichage du texte ou des images simultanément à la diffusion sonore d'un texte. Une autre application concerne l'enseignement assisté par ordinateur, en particulier dans le domaine des langues étrangères.

La présente invention concerne plus particulièrement un procédé de multiplexage de deux signaux numériques de nature différente en vue de leur enregistrement sur un support numérique organisé en secteurs indexés, dont la longueur de L octets est définie et invariable, caractérisé en ce que l'on constitue des multitrames d'une longueur totale de M octets organisées en trois séries de trames, la première série de trames de ladite multitrame correspondant à un préambule regroupant la totalité des signaux de service, la deuxième série de trames regroupant en K canaux successifs de signaux numériques de la deuxième catégorie, la longueur cumulée des trois séries de trames étant de M octets, la longueur de ladite première série de trames et la longueur de ladite deuxième série de trames étant des multiples de K, M étant un multiple entier ou demi-entier de L.

Un tel procédé de multiplexage apporte une solution simple et peu coûteuse pour permettre une connection via un interface, entre un lecteur de compact-disque standard comportant une sortie numérique et un terminal informatique tel qu'un Minitel.

Selon un mode de réalisation préféré, la multitrame précédemment évoquée est organisée en 147 blocs de 24 octets. Cette valeur particulière a été déterminée par la demanderesse en vue d'une compatibilité optimale du procédé avec les débits standards des lecteurs de disques numériques, les débits standards des terminaux informatiques et les débits standards des circuits de traitement de signaux numériques audio à faible bande passante.

Selon une variante avantageuse, la première série de trames est constituée par une trame unique de 72 octets, la deuxième série de trames est constituée par une trame unique de 896 octets correspondant à des données informatiques textuelles ou graphiques, et la troisième série de trames est constituée d'une trame de 2560 octets correspondant à des signaux audio. De préférence, les deuxième et troisième séries de trames sont organisées en seize canaux successifs. Cette organisation permet d'exploiter de façon optimale les circuits de traitement de signaux audio-numériques de 64 kilobits par secondes. Les seize canaux successifs permettent de réaliser des livres parlant d'une durée de 16 à 20 heures.

Les seize canaux de la deuxième série de trames permettent le stockage des signaux numériques relatifs aux informations textuelles, graphiques ou visuelles, selon différents standards de terminaux informatiques, par exemple, des canaux de 1 200 bits par seconde, 4 800 bits par seconde, 16 000 bits par seconde et 19,2 kilobits par seconde. Une boucle de lecture de chacune des multitrames permet de lire successivement les seize canaux de données audio-numériques afin de prolonger la durée de diffusion de l'information sonore correspondant à l'information visuelle ou textuelle stockée dans la deuxième série de trames, ou encore de stocker des informations audio-numériques correspondant à la stérophonie ou à la multiphonie ou encore à des langues différentes.

De préférence, les deuxième et troisième séries de trames sont organisées en seize canaux successifs. Ce choix est considéré par la demanderesse comme une solution avantageuse permettant d'assurer un bon équilibre entre la durée d'affichage de l'information visuelle, graphique ou textuelle, et la durée de diffusion de l'information sonore correspondante.

L'information audio-numérique est de préférence cadencée à 64 kilobits par seconde, afin de rester compatible avec des circuits de traitement audio-numériques standards. .

La présente invention concerne également un procédé de décodage de signaux numériques ainsi multiplexés. Ce procédé de décodage consiste à séparer les signaux de services et les signaux de données, à sélectionner ·au moins un des seize canaux, à orienter les signaux du canal sélectionné correspondant à la deuxième série de trames vers une première sortie et les signaux du canal sélectionné correspondant à la troisième série de trames vers une deuxième sortie, cette orientation étant effectuée par microprocesseur commandé par les signaux de services.

Le procédé de décodage selon la présente invention permet d'exploiter de façon extrêmement économique les signaux délivrés par un lecteur de disques numériques sur lequel sont enregistrés des signaux de nature différente multiplexés selon le procédé mis au point par la demanderesse, en vue de leur utilisation sur des périphériques standards tels que terminal d'ordinateur ou amplificateur sonore.

La présente invention concerne également une interface pour le décodage de signaux numériques, en particulier de signaux numériques enregistrés sur un disque numérique, caractérisé en ce qu'il comporte une entrée unique connectable à la sortie numérique d'un lecteur de disques numériques, reliée à un premier circuit de reconnaissance de la séquence de signaux de service orientant lesdits signaux de service vers un circuit à microprocesseur et les autres signaux vers un circuit de séparation de canaux, un circuit de sélection d'au moins un canal , commandé par des moyens de sélection accessibles par un utilisateur, un circuit de démultiplexage commandé par ledit circuit à microprocesseur orientant les signaux provenant du circuit de sélection vers un premier circuit de traitement de la première catégorie de signaux et vers un deuxième circuit de traitement de la deuxième catégorie de signaux.

Selon un mode de réalisation avantageux, ladite interface comporte en outre un premier circuit de mise en forme destiné au traitement des données informatiques et un deuxième circuit de décompression temporelle des signaux audio-numériques relié à un convertisseur digital analogique. Une telle interface permet de connecter directement à ces deux sorties un terminal d'ordinateur et un amplificateur analogique.

La présente invention concerne encore un disque numérique, caractérisé en ce qu'il comporte des secteurs de données numériques organisées en multitrames d'une longueur totale de M octets organisées en trois séries de trames, la première série de trames de ladite multitrame correspondant à un préambule regroupant la totalité des signaux de service, la deuxième série de trames regroupant en K canaux successifs les signaux numériques de la première catégorie et la troisième série de trames regroupant en K canaux successifs les signaux numériques de la deuxième catégorie, la longueur cumulée des trois séries de trames étant de M octets, la longueur de ladite première série de trames et la longueur de ladite deuxième série de trames étant des multiples de K, M étant un multiple entier ou demi-entier de L.

Un tel disque présente l'avantage de permettre le stockage d'un livre parlant, de plusieurs heures et de pouvoir être fabriqué sur des installations connues sans qu'aucune modification ne soit nécessaire. De même, un tel disque numérique peut être lu sur un lecteur de disques numériques standard, pour peu qu'il possède une sortie numérique, sans qu'aucune modification ne soit nécessaire sur ce matériel. Le seul accessoire nécessaire sera une interface, conformément à l'invention, qui se connectera directement sur le lecteur de disques numériques standard.

Selon un mode de réalisation préféré, le disque numérique est caractérisé en ce que la première série de trames est constituée par une trame unique de 72 octets constituant un préambule de données de service telles que la synchronisation trame et multitrames, les références de plages et les indexages, la deuxième série de trames est constituée par une trame unique de 896 octets affectés à des données informatiques cadencées à 1 200, 4 800, 9 600, 16 000 ou 19 200 bauds, et la troisième série de trames est constituée par une trame unique de 2560 octets affectes a 16 canaux de signaux audio cadencés à 64 kilobits par seconde.

La présente invention sera mieux comprise à la lecture de la description qui suit, s'appuyant sur les dessins ou :

La figure 1 représente une vue schématique d'une multitrame ;

La figure 2 représente le schéma de principe d'une interface ;

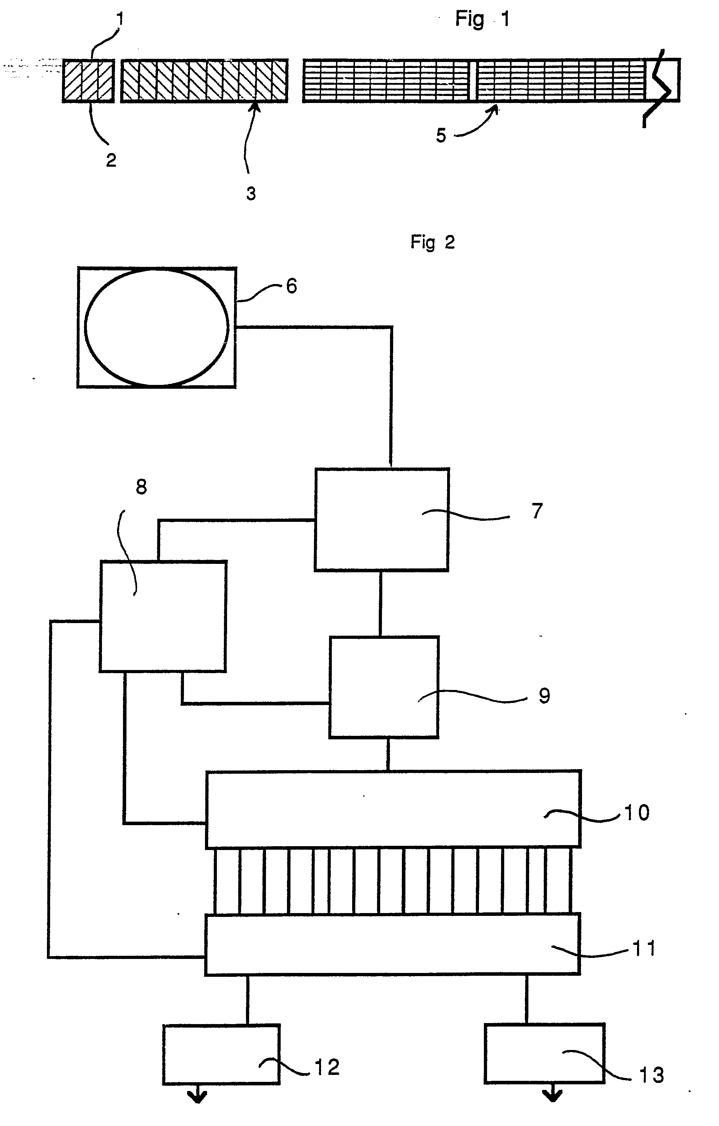

La figure 1 représente, de façon schématique, une multitrame comportant une première trame (1), correspondant à un préambule, une deuxième trame (3) correspondant à des données informatiques et une troisième trame (5) correspondant à des signaux audio-numériques.

La première trame (1) est constituée de trois blocs (2) de 24 octets utiles. Ces 72 octets représentent une capacité d'adressage suffisante pour gérer les informations relatives à la syncro trame et multitrame, au numéro de plages, au nombre de secteurs, au numéro du secteur, au numéro de la séquence, au numéro de la multitrame, au nombre de pages, au début de pages, au numéro de pages, au type de pages et au chaînage à mettre en oeuvre, à la temporisation, au débit et mode de présentation des différents canaux de signaux informatiques ainsi qu'aux différents branchement entre plage, secteur et piste. De préférence, les premiers octets constituent une séquence d'identification permettant de synchroniser les circuits de décodage. Cette caractéristique est bien connue de l'homme du métier et il n'est pas utile de la décrire plus en détail.

La deuxième trame (3) est divisée en seize blocs de 56 octets. Chacun des blocs constituent un canal permettant l'enregistrement de données informatiques représentatives de texte ou d'image.

On dispose d'une capacité d'enregistrement à l'intérieur d'une multitrame de 20 milli-secondes de 3456 octets ou de 256 octets par canal. Sachant qu'un octet par trame de période 20 milli seconde représente un débit potentiel de 400 bits par secondes, on constate que l'on peut constituer avec les octets disponibles des arrangements de canaux constitués par:
- des canaux à 1 200 bits par seconde, avec trois octets par multitrame ;
- des canaux à 2 400 bits par seconde, avec six octets par multitrame ;
- des canaux à 4 800 bits par seconde, avec douze octets par multitrame ;
- des canaux à 8 000 bits par seconde, avec vingt octets par multitrame ;
- des canaux à 9 600 bits par seconde, avec vingt quatre octets par multitrame ;
- des canaux à 16 000 bits par seconde, avec quarante octets par multitrame ;
- des canaux à 19 200 bits par seconde, avec quarante huit octets par multitrame ;
- des canaux à 64 000 bits par seconde, avec cent soixante octets par multitrame.

Bien entendu, le nombre de canaux et leur arrangement dépend de la taille de la multitrame selon une fonction facile à déterminer par l'homme du métier.

Dans l'exemple décrit à titre non limitatif, la deuxième trame (3) comporte seize canaux à 9 600 bits par seconde, correspondant à l'un des standards des transmission d'informations numériques.

La troisième série de trame (5) est divisée en seize blocs de 160 octets. Cette série de trames (5) permet d'enregistrer seize canaux de paroles de 64 kilobits par seconde.

Il est ainsi possible de stocker dans chaque canal 20 milli-secondes de paroles, soit 2,88 secondes par multitrame de son monophonique, ou 1,44 secondes de son stéréophonique par multitrame. En choisissant une fréquence d'échantillonnage inférieure à 64 kilobits par seconde, il est possible d'augmenter sensiblement la durée d'enregistrement dans chaque multitrame au dépend de la qualité de restitution.

Selon un mode d'application particulier, on lie une multitrame et on restitue séquentiellement les seize canaux successifs.

Un secteur indexé de compacts disques audio, à habituellement une longueur de 3 528 octets constituant une enveloppe temporelle de 20 milli seconde.

A titre d'exemple, il est possible d'organiser les multitrames comme indiqué dans la matrice ci-dessous.

| NOMBRE D'OCTETS OU PAGE VIDEOTEX | PAR MULTITRAME DE | | PAR SEQUENCES DE 256 | |
|---|---|---|---|---|
| disponibles | 147 blocs = 20 msec | | Multitrames = 5 sec. | |
| | 1 canal | 16 canaux | 1 canal | 16 canaux |
| Canal de service à 1 200 bits/sec | 3 octets | 48 octets | 766 octs | 12 288 Octs |
| | | | 1 à 2 pages | 16 à 32 p |
| Canal de données à 4800 bits/sec. | 12 octets | 144 octets | 3 KOctets | 49KOctets |
| | | | 4 à 6 pages | 48 à 96 p |
| Canal de données à 16 Kbits/sec. | 40 octets | 640 octets | 10,2 KOct. | 160 KOct. |
| | | 1 page | 150 à 300 p. | 2 500 à 5 000 p. |
| Canal de données à 19,2 Kbits/sec | 48 octets | 768 octets | 14,2 KOct. | 230 KOct. |
| | | 1 à 2 pages | 250 à 500 p. | 4000 à 8000 p. |
| Canal de parole à 64 Kbits/sec | 160 Octets | 2 560 Octets | 40 KOctets | 640 KOct. |

La figure 2 représente un schéma d'un principe d'une interface de décodage de signaux multiplexés suivant la présente invention.

4

EP 0 391 771 A1

Les signaux émanant de lecteur de compact de disques (6) sont transmis via une sortie numérique à un premier circuit (7) de reconnaissance de la séquence de signaux de service. Ce circuit de reconnaissance (7) de signaux de service dirige lesdits signaux de services vers un circuit à mricroprocesseur (8) gérant la synchronisation de l'interface. Les autres signaux correspondant aux deuxième et troisième séries de trames, sont orientés vers un circuit de séparation des canaux (9) reliés à un circuit de démultiplexage (10).

Un circuit de sélection (11) sélectionne le ou les canaux définis par l'utilisateur, au moyen d'un clavier ou de tout périphérique habituellement utilisé pour commander des circuits électroniques. Le circuit de sélection (11) oriente les signaux correspondant aux données informatiques à un premier circuit de traitement (12) et les signaux correspondant aux informations sonores vers un deuxième circuit de traitement (13). Les circuits de traitement (12, 13) comporte avantageusement un circuit de décompression temporelle. Par ailleurs, le circuit de traitement des signaux audio-numériques peut, selon un mode de réalisation particulier, comporter un convertisseur digital analogique destiné à attaquer directement un amplificateur de type courant.

La présente invention concerne, bien entendu, également le disque numérique comportant des signaux multiplexés suivant la présente invention. A titre d'exemple, un compact disque de 72 minutes comporte 72 fois 12 séquences de 5 secondes, ou encore 850 multitrames dont la capacité peut être répartie à titre exemple en 6900 images fixes associées à près de 13 heures de parole, échantillonnées à 64 kilobits par seconde.

Bien entendu, la présente invention n'est en aucune façon limitée aux exemples précédemment décrits pour mieux la faire comprendre, mais s'étend au contraire à toutes les variantes d'exécution.


**Revendications**

1 - Procédé de multiplexage de deux signaux numériques de nature différente en vue de leur enregistrement sur un support numérique organisé en secteurs indexés dont la longueur de L octets est définie et invariable, caractérisé en ce que l'on constitue des multitrames (organisées en 147 blocs de 24 octets), d'une longueur totale de M octets organisée en trois séries de trames, la première série de trames de ladite multitrame correspondant à un préambule regroupant la totalité des signaux de service, la deuxième série de trames regroupant en K canaux successifs les signaux numériques de la première catégorie et la troisième série de trames regroupant en K canaux successifs les signaux numériques de la deuxième catégorie, la longueur cumulée des trois séries de trames étant de M octets, la longueur de ladite première série de trames et la longueur de ladite deuxième série de trames étant des multiples de K, M étant un multiple entier ou demi-entier de L.

2 - Procédé de multiplexage de deux signaux de nature différente selon la revendication 1, caractérisé en ce que la première série de trames est constituée par une trame unique de 72 octets, la deuxième série de trames est constituée par une trame unique de 896 octets correspondant à des données informatiques, textuelles ou graphiques et en ce que la troisième série de trames est constituée de 2 560 octets correspondant à des signaux audio.

3 - Procédé de multiplexage de deux signaux de nature différente selon la revendication 2, caractérisé en ce que la deuxième série de trames et la troisième série de trames sont organisées en 16 canaux successifs.

4 - Procédé de multiplexage de deux signaux de nature différente selon l'une quelconque des revendications 1 à 3, caractérisé en ce que la première série de trames est constituée par une trame unique de 72 octets constituant un préambule de données de service telles que la synchronisation trame et multitrames, les références de plages, et les indexages, la deuxième série de trames est constituée par une trame unique de 896 octets affectés à des données informatiques cadencées à 1 200, 4 800, 9 600, 16 000, ou 19 200 bauds, et la troisième série de trames est constituée de 2 560 octets affectés à 16 canaux de signaux audio cadencés à 64 kilobits par seconde.

5 - Procédé de décodage de signaux numériques multiplexés conformément à l'une quelconque des revendications précédentes, caractérisé en ce que l'on sépare les signaux de service et les signaux de données, on sélectionne au moins un desdits canaux, on oriente les signaux du canal sélectionné correspondant à la deuxième série de trames vers une première sortie et les signaux du canal sélectionné correspondant à la troisième série de trames vers une deuxième sortie, ladite orientation étant effectuée par un microprocesseur commandé par lesdits signaux de service.

6 - Interface pour le décodage de signaux numériques, en particulier de signaux numériques enregistrés sur un disque numérique, caractérisée en ce qu'elle comporte une entrée unique connectable à la sortie numérique d'un lecteur de disques numériques reliée à un premier circuit de reconnaissance de la

5

séquence de signaux de service orientant lesdits signaux de service vers un circuit à microprocesseur et les autres signaux vers un circuit de séparation des canaux, un circuit de sélection d'au moins un canal commandé par des moyens de sélection accessibles par un utilisateur, un circuit de démultiplexage commandé par ledit circuit à microprocesseur orientant les signaux provenant du circuit de sélection vers un premier circuit de traitement de la première catégorie de signaux et vers un deuxième circuit de traitement de la deuxième catégorie de signaux.

7 - Interface pour le décodage de signaux numériques, en particulier de signaux numériques enregistrés sur un disque numérique selon la revendication 6, caractérisée en ce que ledit premier circuit de mise en forme est destiné au traitement des données informatiques et en ce que le deuxième traitement est destiné au traitement des signaux audio-numériques et comporte un circuit de décompression temporelle ainsi qu'un convertisseur digital-analogique.

8 - Disque numérique, caractérisé en ce qu'il comporte des secteurs de données numériques organisées en multitrames d'une longueur totale de M octets organisées en trois séries de trames, la première série de trames de ladite multitrame correspondant à un préambule regroupant la totalité des signaux de service, la deuxième série de trames regroupant en K canaux successifs les signaux numériques de la première catégorie et la troisième série de trames regroupant en K canaux successifs les signaux numériques de la deuxième catégorie, la longueur cumulée des trois séries de trames étant de M octets, la longueur de ladite première série de trames et la longueur de ladite deuxième série de trames étant des multiples de K, M étant un multiple entier ou demi-entier de L.

9 - Disque numérique selon la revendication 8, caractérisé en ce que la première série de trames est constituée par une trame unique de 72 octets constituant un préambule de données de service telles que la synchronisation trame et multitrames, les références de plages, et les indexages; la deuxième série de trames est constituée par une trame unique de 896 octets affectés à des données informatiques cadencées à 1 200, 4 800, 9 600, 16 000 ou 19 200 bauds, et la troisième série de trame est constituée de 16 blocs de 160 octets affectés à 16 canaux de signaux audio cadencés à 64 kilobits par seconde.

EP 0 391 771 A1

Fig 1

Fig 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 707 818 (SUZUKI et al.)<br>* Figures 7,14,15A-E,20-24; colonne 6, ligne 49 - colonne 8, ligne 16; colonne 11, ligne 20 - colonne 12, ligne 19; colonne 13, ligne 26 - colonne 17, ligne 13 * | 1,6-8 | H 04 J    3/16<br>G 11 B    7/013 |
| A | | 2-5,9 | |
| | --- | | |
| A | US-A-4 777 537 (KATSUHIKO et al.)<br>* Résumé; revendication 1 * | 1,6,8 | |
| | --- | | |
| A | PATENT ABSTRACTS OF JAPAN, vol. 5, no. 159 (E-77)[831], 14 octobre 1981, page 36 E 77; & JP-A-56 87 954 (NIPPON DENSHIN DENWA KOSHA) 17-07-1981<br>* En entier * | 1 | |
| | ----- | | |

DOMAINES TECHNIQUES RECHERCHES (Int. Cl.5)

H 04 J
G 11 B

Le présent rapport a été établi pour toutes les revendications

| Lieu de la recherche | Date d'achèvement de la recherche | Examinateur |
|---|---|---|
| LA HAYE | 06-07-1990 | BISCHOF J.L.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P0402)